# EUROPEAN PATENT SPECIFICATION

(11) **EP 0 207 168 B1**
(45) Date of publication and mention of the grant of the patent: **13.10.1993**
(21) Application number: 86900266.7
(22) Date of filing: 24.12.1985
(51) Int. Cl.: G05B 19/18, G05B 19/417

(54) **DRIVE CONTROL SYSTEM FOR SERVO MOTORS**
REGELANORDNUNG DES ANTRIEBS VON SERVOMOTOREN
SYSTEME DE COMMANDE DE L'ENTRAINEMENT DE SERVOMOTEURS

(30) Priority: 25.12.1984 JP 277877/84
(43) Date of publication of application: 07.01.1987
(73) Proprietor: FANUC LTD., Minamitsuru-gun, Yamanashi 401-05 (JP)
(72) Inventor: KURAKAKE, Mitsuo, Hino-shi Tokyo 191 (JP)
(74) Representative: Billington, Lawrence Emlyn
(86) International application number: JP8500707
(87) International publication number: WO8603854

(56) References cited:
- GB-A- 2 086 085
- JP-A-56 152 005
- US-A- 4 459 655
- RADIO FERNSEHEN ELEKTRONIK, vol. 28, no. 11, November 1979, Berlin,DD;pages 694 - 700; G.WOLLENBERG: "CNC 600 Ein numerisches Steuerungssystem auf Mikrorechnerbasis"
- "THE NUMERICAL CONTROL OF MACHINE TOOLS", W.SIMON, 1973 (1970); Edward Arnold, London,GB; pages 371-376

## Description

This invention relates to a drive control system of a servomotor for driving a load such as a machine tool.

In order to control a multiple-axis machine tool or the like with a high degree of accuracy, use is made of a servomotor driven by a command signal from a numerical control unit (hereafter referred to as an NC unit) or the like. Conventionally, servomotors of this type are driven by analog servo systems. However, with the progress that has recently been made in the technical development of computer control, various expedients dealing with the question of how to control a plurality of servomotors efficiently by a single control unit have been devised.

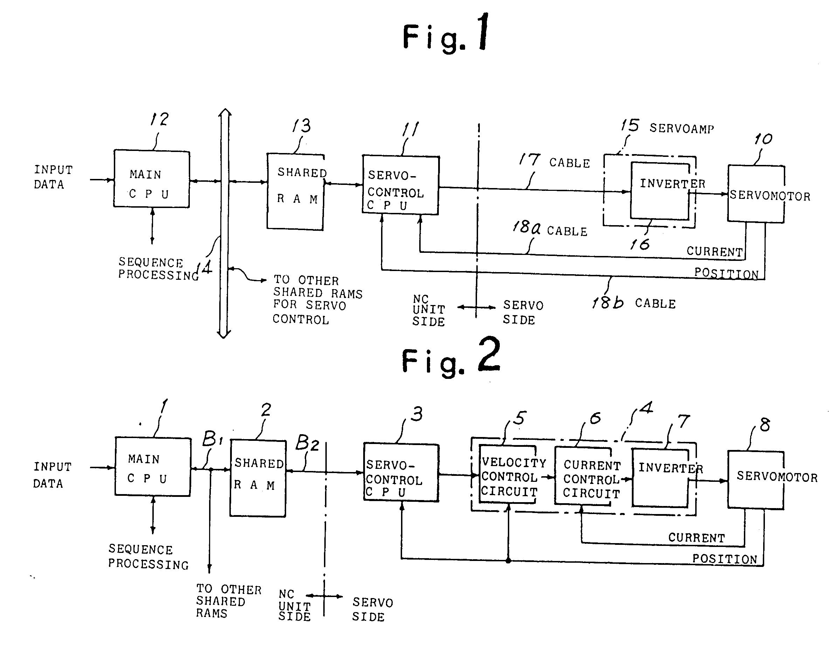

Fig. 2 is a block diagram illustrating the general features of such a servomotor control circuit. As shown in the Figure, a main CPU 1 of microprocessor construction, which is for reading in input data and executing predetermined processing, and a plurality of shared RAMs 2, are connected to an NC unit side by a data bus B1. A servo-control CPU 3 of microprocessor construction is connected to each of the shared RAMs 2 via a bus B2 and outputs an analog signal indicative of a velocity command to each servoamplifier 4 associated with a servomotor. The servoamplifier 4 comprises a velocity control circuit 5, a current control circuit 6 and an inverter 7 and subjects a servomotor 8 to prescribed feedback control on the basis of current, position and velocity.

Each shared RAM 2 is for performing an exchange of data between the main CPU 1 and the servo-control CPU 3. For example, a signal indicative of the position of the servomotor 8 is temporarily stored in the shared RAM 2 through the servo-control CPU 3, and the main CPU 1 reads out this stored value to perform display processing and the like. Further, a position command signal from the main CPU 1 is temporarily stored in the shared RAM 2 and the servo-control CPU 3 reads out this stored value and outputs a velocity command to the servoamplifier 4.

An apparatus generally of this type is disclosed in GB-A-2086085.

In such a digital servomotor control system the servo-control CPU and the servoamplifier are provided on the servo side, namely close to the load, e.g. a machine tool, driven by the servomotor. With the above control system, however, the environment in which the CPU is installed is undesirable for the electronic circuitry in view of vibration and the high ambient temperature. Such an environment is a cause of failure and malfunction, especially for a CPU using an IC having a high degree of integration. Further, since complex circuitry for position, current and other control functions is provided in such an environment, the performance of adjustments and maintenance is accompanied by complications and hazards. Problems are also encountered in terms of operating efficiency.

Furthermore, since the main CPU and the CPU on the servo side are remote from each other, a high-speed interface device is necessary to transfer data. A problem that results is higher cost. This is illustrated, for instance, in section 9.5 on pages 371-376 of the book 'The numerical control of machine tools', W. Simon, 1973 (1970); Edward Arnold, London. Figs. 247 and 248 in that section each show an NC machine including a processor, and a remote host computer responsible for a greater or lesser proportion of the control of the machine. This arrangement needs screened multi-core leads between the host computer and the individual machines with their NC equipment.

According to the invention there is provided a servo-operated machine including a servomotor, a servoamplifier for the servomotor, and a servomotor drive control system in which a drive command signal and data fed back from a servomotor are to be processed to drive and control the servomotor, the control system comprising: a main CPU for performing input data processing and sequence processing and a numerical control unit associated with the main CPU and including a servo-control CPU for controlling the servomotor and dedicated to it;
characterised in that the numerical control unit is coupled to the main CPU so as to constitute a processing section and this processing section is arranged remote from the servoamplifier and connected to it by cables for exchanging current, velocity and position command and detection data.

Embodiments of the present invention thus provide a servomotor drive control system in which the servocontrol CPU is provided on the NC unit side and is connected to the main CPU by the main CPU data bus, thereby greatly reducing the control circuitry provided on the servo side and enabling data to be transferred at high speed.

Since the processing section and the servomotor are arranged remote from each other it is possible to transfer servomotor drive commands and feedback data between the processing section and the servomotor at high speed without requiring a special interface device.

Further, the major portion of such complex control circuitry as the servo-control CPU and the main CPU that performs the input data processing and sequence processing is arranged on the NC unit side, and only the minimum number of circuit elements need be provided on the load side. As a result, operator maintenance and control operations are simplified, and it is possible to prevent control apparatus failure and malfunction caused by such environmental conditions as vibration and heat.

### Brief Description of the Drawings

Fig. 1 is a block diagram illustrating an embodiment of the present invention, and Fig. 2 is a block diagram illustrating an example of a conventional servomotor drive control system.

An embodiment of the present invention will now be described in detail with reference to the drawings.

Fig. 1 is a block diagram of an embodiment of the present invention, in which one (or a plurality of) servo-control CPU 11 for controlling the current, velocity and position of a servomotor 10 is arranged in an NC unit along with a main CPU 12 and a shared RAM 13, and is connected to the main CPU 12 by a data bus 14. An example of an application in which a plurality of servo-control CPUs 11 are provided is one where a servo circuit for driving various articulations of a robot having plural degrees of freedom is to be controlled. The servo-control CPU 11 provides a servoamplifier 15 with a PWM command in the form of a digital signal. Accordingly, an inverter 16 in the servoamplifier 15 is constructed to include only final stage driver elements such as power transistors. In other words, almost all complicated control circuit elements are disposed on the NC side, and only the minimum number of circuit elements such as the power transistors are disposed in a control panel on the load side.

Numeral 17 denotes a cable for sending digital signals such as the PWM command from the NC unit side to the servoamplifier 15. Numerals 18a, 18b denote cables for feeding back current and position data, respectively, from the servomotor 10 to the NC unit side.

With a servomotor control system so constructed, the main CPU 12, which reads in input data and performs predetermined sequence control, applies a drive command for each servomotor 10 to the servo-control CPU via the shared RAM 13. The servo-control CPU sends current, velocity and position control signals to the servo side via the cable 17. In response to these control signals, the servoamplifier 15 drives the servomotor 10. Signals indicative of the current and position of the servomotor 10 are fed back to the NC unit side via the cables 18a, 18b.

Accordingly, the servo-control CPU 11 and the main CPU 12 are both located within the NC unit, and data are transferred between them at high speed via the shared RAM 13. If a plurality of servomotors are to be driven and controlled, this can be accomplished efficiently through an arrangement in which the main CPU is coupled to CPUs dedicated to respective ones of the servomotors. Moreover, since the arithmetic circuitry is remote from the environment in which the servomotor is installed, failures and malfunctions due to vibration and heat can be reduced and both maintenance and inspection are facilitated.

The present invention is not limited to the above-described embodiment. Outstanding results can be obtained even if the invention is applied to a control system based on various data other than data relating to position and velocity. Such applications do not depart from the scope of the invention.

### Industrial Applicability

The servomotor drive control system according to the invention enables servomotor drive commands and feedback data to be transferred at high speed without requiring a special interface device. In addition, since the major portion of the complicated control circuitry is arranged on the NC unit side and only the minimum number of circuit elements are disposed on the load side, control of a machine tool or the like is simplified and it is possible to prevent control apparatus failures and malfunctions caused by such environmental conditions as vibration and temperature.

## Claims

1. A servo-operated machine including a servomotor (10), a servoamplifier (15) for the servomotor, and a servomotor drive control system in which a drive command signal and data fed back from a servomotor (10) are to be processed to drive and control the servomotor, the control system comprising: a main CPU (12) for performing input data processing and sequence processing and a numerical control unit (11,13) associated with the main CPU and including a servo-control CPU (11) for controlling the servomotor and dedicated to it;
characterised in that the numerical control unit (11,13) is coupled to the main CPU (12) so as to constitute a processing section and this processing section is arranged remote from the servoamplifier (15) and connected to it by cables (17,18a,18b) for exchanging current, velocity and position command and detection data.

2. A servomotor drive control system according to claim 1, in which the servoamplifier comprises an inverter (16) consisting only of final stage driver elements.

3. A servomotor drive control system according to claim 1 or 2 and having a plurality of servo-control CPUs (11) for controlling current, velocity and position of respective servomotors (10).

4. A servomotor drive control system according to claim 3, in which the servo-control CPUs (11) are adapted respectively for controlling a servo circuit which drives each articulation of an industrial robot.

## Patentansprüche

1. Servobetriebene Maschine, die einen Servomotor (10), einen Servoverstärker (15) für den Servomotor und ein Servomotor-Antriebsregelsystem enthält, in dem ein Triebbefehlssignal und Daten, die von dem Servomotor (10) rückgekoppelt werden, zu verarbeiten sind, um den Servomotor zu treiben und zu regeln, welches Regelsystem eine Haupt-CPU (12) zum Durchführen einer Eingangsdaten-Verarbeitung und einer Ablauffolge-Verarbeitung und eine numerische Steuereinheit (11, 13) umfaßt, die der Haupt-CPU zugeordnet ist und eine Servoregel-CPU (11) zum Regeln des Servomotors enthält und für diesen bestimmt ist,
dadurch **gekennzeichnet,** daß die numerische Steuereinheit (11, 13) mit der Haupt-CPU (12) verbunden ist, um auf diese Weise einen Verarbeitungsabschnitt zu bilden, und daß dieser Verabeitungsabschnitt von dem Servoverstärker (15) entfernt angeordnet ist und mit diesem durch Kabel (17, 18a, 18b) zum Liefern von Strom und zum Austauschen von Geschwindigkeits- und Positionsbefehlen und Erfassungsdaten verbunden ist.

2. Servomotor-Antriebsregelsystem nach Anspruch 1, bei dem der Servoverstärker einen Inverter (16) umfaßt, der nur aus Endstufen-Treiberelementen besteht.

3. Servomotor-Antriebsregelsystem nach Anspruch 1 oder 2, das eine Vielzahl von Servoregel-CPUs (11) zum Regeln des Stroms, der Geschwindigkeit und der Position betreffender Servomotoren (10) hat.

4. Servomotor-Antriebsregelsystem nach Anspruch 3, bei dem die Servoregel-CPUs (11) jeweils zum Steuern einer Servoschaltung bestimmt sind, die jedes Gelenk eines industriellen Roboters treibt.

## Revendications

1. Une machine à fonctionnement asservi comprenant un servomoteur (10), un servo-amplificateur (15) pour le servomoteur et un système de commande de l'entraînement du servomoteur dans lequel un signal d'ordre d'entraîne-ment et des données appliquées en retour à partir d'un servomoteur (10) doivent être traités pour entraîner et commander le servomoteur, le système de commande comprenant : un UCT principal (12) pour effectuer un traitement des données d'entrée et un traitement séquentiel ainsi qu'une unité de commande numérique (11, 13) associée à l'UCT principal et comprenant un UCT de servocommande (11) pour commander le servomoteur et y être lié ;
caractérisée en ce que l'unité de commande numérique (11, 13) est couplée à l'UCT principal (12) afin de constituer une section de traitement, et cette section de traitement est montée à distance du servo-amplificateur (15) et reliée à celui-ci par des càbles (17,18a, 18b) pour échanger des ordres de courant, de vitesse et de position, ainsi que des données de détection.

2. Un système de commande d'entraînement d'un servomoteur selon la revendication 1, dans lequel le servoamplificateur comporte un inverseur (16) ne comprenant que des éléments de pilotage de l'étage final.

3. Un système de commande d' entraînement d'un servomoteur selon la revendication 1 ou 2 et présentant un ensemble d'UCT de servocommande (11) pour commander le courant, la vitesse et la position de servomoteurs respectifs (10).

4. Un système de commande d'entraînement d'un servomoteur selon la revendication 3, dans lequel les UCT de servocommande sont prévus respectivement pour commander un circuit d'asservissement qui entraîne chaque articulation d'un robot industriel.
